# EUROPEAN PATENT SPECIFICATION

(11) **EP 3 097 289 B1**
(45) Date of publication and mention of the grant of the patent: **30.12.2020**
(21) Application number: 15741071.3
(22) Date of filing: 09.01.2015
(51) Int. Cl.: F02C 7/00, F01D 25/28, G01M 1/32, F01D 5/02

(54) **TURBINE ENGINE BALANCING STRUCTURE AND METHOD**
AUSWUCHTSTRUKTUR UND VERFAHREN FÜR EINEN TURBINENMOTOR
STRUCTURE ET PROCÉDÉ D'ÉQUILIBRAGE DE MOTEUR À TURBINE

(30) Priority: 21.01.2014 US 201461929689 P
(43) Date of publication of application: 30.11.2016
(73) Proprietor: United Technologies Corporation, Farmington, CT 06032 (US)
(72) Inventor: LOPEZ, Jesus S., Royal Palm Beach, Florida 33411 (US); BORJA, Mark, Palm Beach Gardens, Florida 33410 (US)
(74) Representative: Dehns
(86) International application number: PCT/US2015/010728
(87) International publication number: WO 2015/112344

(56) References cited:
- EP-A1- 1 878 871
- EP-A1- 2 520 767
- WO-A1-2011/070100
- DE-A1-102005 053 786
- GB-A- 2 454 569
- US-A- 5 810 527
- US-A1- 2005 244 272
- US-A1- 2006 188 379
- US-A1- 2011 081 253

## Description

### BACKGROUND

This disclosure relates to balancing rotatable devices and, more particularly, to turbine engine balancing.

Gas turbine engines typically include a compressor section, a combustor section, and a turbine section. During operation, air is pressurized in the compressor section. The pressurized air is mixed with fuel and burned in the combustor section to generate hot combustion gases. The hot combustion gases are communicated through the turbine section, which extracts energy from the hot combustion gases to power the compressor section and other gas turbine engine loads.

The compressor and turbine sections of a gas turbine engine typically include alternating rows of rotating blades and stationary vanes. The turbine blades rotate and extract energy from the hot combustion gases that are communicated through the gas turbine engine. The turbine vanes prepare the airflow for the next set of blades. The vanes extend from platforms that may be contoured to manipulate flow.

Industrial land-based gas turbine engines and propulsive gas turbine engines may both require balancing. Balancing takes place before operation and at service intervals. Detail balancing balances individual gas turbine engine components. Trim balancing balances the gas turbine engine overall.

GB 2 454 569 A discloses a prior art method in accordance with the preamble of claim 1, and a prior art rotor in accordance with the preamble of claim 8.

EP 1878871 discloses a prior art turbomachine having a rotor shaft which carries rotor blades, DE 10 1005 053 786 A1 discloses a prior art method and device for the dynamic measuring of the unbalance of a rotor, WO 2011/070100 A1 discloses a prior art coupling for rotor balancing.

### SUMMARY

According to an aspect of the present invention, there is provided a method as set forth in claim 1.

In another example of the foregoing method, the method includes trim balancing a low pressure rotor of a gas turbine engine during the balancing.

In another example of any of the foregoing methods, the gas turbine engine is a land-based gas turbine engine.

In another example of any of the foregoing methods, the cavities are radially outside a central bore of the shaft.

In another example of any of the foregoing methods, the method includes selecting the balancing insert from among a plurality of balancing inserts having varied weights.

In another example of any of the foregoing methods, the method includes holding the balancing insert axially within the cavity using a shaft bore cover.

In another example of any of the foregoing methods, the method includes holding the shaft bore cover axially utilizing a trim ring received within a circumferential groove of the shaft.

In another example of any of the foregoing methods, the method includes providing the plurality of cavities with the shaft.

In another example of any of the foregoing methods, the method inserting a cartridge into a bore provided by the shaft, the cartridge providing the plurality of cavities.

According to a further aspect of the present invention, there is provided a gas turbine rotor as set forth in claim 8.

In another example of any of the foregoing turbine rotors, the gas turbine engine is a land-based gas turbine engine.

In another example of any of the foregoing turbine rotors, the cavity is radially outside a central bore of the shaft.

In another example of any of the foregoing turbine rotors, the balancing insert is one of a plurality of balancing inserts having varied weights.

In another example of any of the foregoing turbine rotors, a shaft bore cover holds the balancing insert axially within the cavity.

In another example of any of the foregoing turbine rotors, the plurality of cavities are distributed annularly about an axis of the shaft.

In another example of any of the foregoing turbine rotors, a trim ring received within a circumferential groove of the shaft to hold the shaft bore cover axially.

In another example of any of the foregoing turbine rotors, a cartridge provides the plurality of cavities. The cartridge is insertable into a bore provided by the shaft.

### DESCRIPTION OF THE FIGURES

The various features and advantages of the disclosed examples will become apparent to those skilled in the art from the detailed description. The figures that accompany the detailed description can be briefly described as follows:
Figure 1 illustrates a schematic, cross-se-ctional view of a gas turbine engine.
Figure 2 illustrates another example gas turbine engine.
Figure 3 illustrates a section view of an aft end portion of a shaft of the engine of Figure 2.
Figure 4 illustrates an end view of the shaft of Figure 3 with a shaft cover removed.
Figure 5 illustrates an example balancing insert from the shaft of Figure 3.
Figure 6 illustrates a section view at line 6-6 in Figure 3
Figure 7 shows a partial section view of an aft end of another example shaft embodiment of the engine of Figure 2.
Figure 8 shows a full section view of Figure 7.
Figure 9 shows an end view of the shaft of Figure 7.

### DETAILED DESCRIPTION

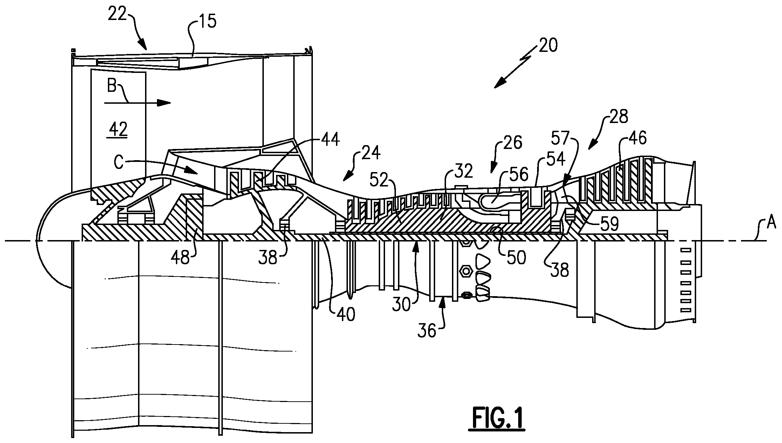

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine engine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and geared architecture 48 may be varied. For example, geared architecture 48 may be located aft of combustor section 26 or even aft of turbine section 28, and fan section 22 may be positioned forward or aft of the location of geared architecture 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition - - typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0,5}(where °R = K x 9/5). The "Low corrected fan tip speed" as disclosed herein according to one non-limiting embodiment is less than about 1150 ft / second (350.52 m/s).

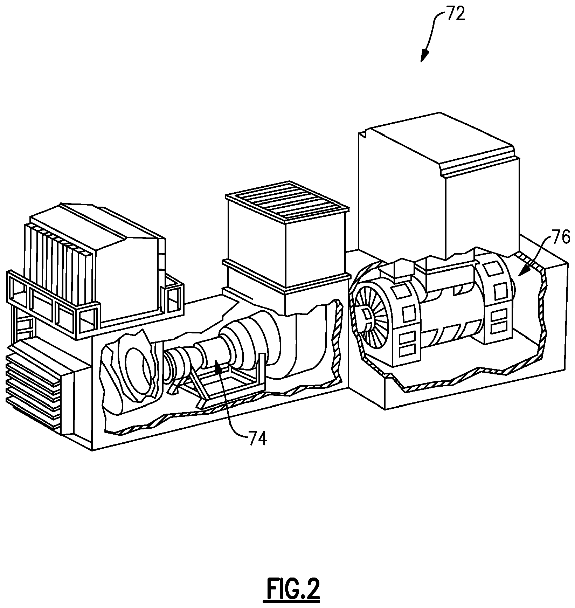

Referring now to Figure 2, an example industrial gas turbine engine assembly 72 includes a gas turbine engine 74 that is mounted to a structural land-based frame to drive a generator 76. The example gas turbine engine 74 includes many of the same features described in the gas turbine engine 20 illustrated in Figure 1 and operates in much the same way. The land-based industrial gas turbine engine 74, however, may include additional features such as a shaft to drive the generator 76 and is not constrained by the same weight restrictions that apply to an aircraft mounted gas turbine engine 20. In addition, the example gas turbine engine 74 does not include a fan.

As appreciated, there are many similarities between the components utilized in aircraft and land-based gas turbine engine. Both aircraft-based and land-based gas turbine engines are within the contemplation of this disclosure.

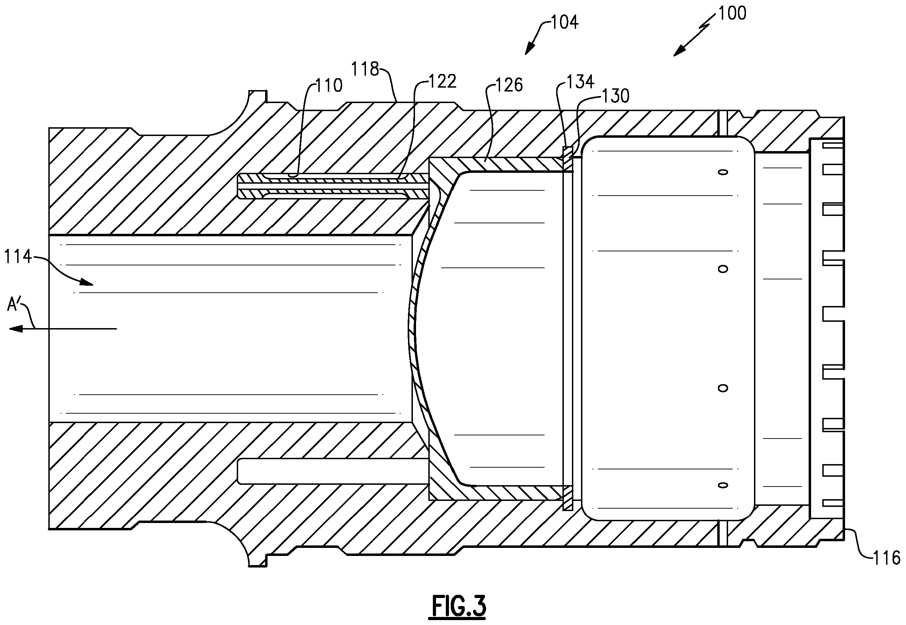

Referring now to Figures 3 to 6 with continued reference to Figure 2, a shaft 100 of the industrial gas turbine engine 74 is utilized to balance the engine 74. The example shaft 100 is part of the low spool of the engine 74.

The balancing may take place immediately after assembly of the engine 74, or during a service interval. The balancing is trim balancing in this example. That is, the balancing of the shaft 100 balances the engine 74 overall.

Engine balancing, in this example, includes three distinct phases: detail balancing, assembly balancing, and engine balancing. The detail balancing phase involves balancing an individual rotatable component about its axis of rotation relative to itself. After the individual rotatable component is assembled with other balanced parts into a large sub-assembly of the engine 20, that sub-assembly is balanced about its axis of rotation during an assembly balancing phase (or module balancing phase). The sub-assembly is then combined with other sub-assemblies to provide the engine 20. The engine 20 is then balanced during the engine balancing phase. During all the balancing phases, balancing may require removing mass, adding mass, or rearranging mass.

An aft portion 104 of the shaft 100 defines a plurality of cavities 110 circumferentially distributed about an axis A' of rotation for the shaft 100. A central bore 114 extends through shaft 100 to an end face 116 of the shaft 100. The example cavities 110 are positioned radially between the bore 114 and an outer surface 118 of the shaft 100.

The cavities 110 are in the aft portion 104.

The cavities 110 each can selectively receive one of a plurality of balancing inserts 122. In another example, the cavities 110 each can selectively receive more than one of the balancing inserts 122. A cover 126 and a snap ring 130 hold the balance inserts 122 within the cavities 110.

The snap ring 130 is received within a groove 134 to hold an axial position of the cover 126, which interfaces directly with the balancing inserts 122. Retaining hardware other than the cover 126 and snap ring 130 may be used to capture or hold the balance inserts 122 in other examples.

The balancing inserts 122 rotatably balance the shaft 100. As can be appreciated, redistributing balancing inserts 122 among the cavities 110 are counterweights that alter the distribution of weight throughout the shaft 100. The balancing inserts 122 can be selectively added and removed from the cavities 110 until the shaft 100 and the low spool of the engine 74 are rotatably balanced.

The balancing inserts 122 are selected from among a plurality of balancing inserts. Some of the balancing inserts 122 within the plurality are heavier than others of the balancing inserts 122. The distribution of weight throughout the shaft 100 can thus also be varied by selecting a heavier or lighter balancing insert 122 for insertion within the cavities 110. In some examples, the balancing inserts 122 all weigh less than a few ounces (or 50 or so grams).

The example balancing inserts 122 are cylindrical. A midsection area of the inserts 122 is reduced relative to a diameter of the inserts 122 at the ends, such that the inserts 122 have a dog-bone type configuration. The variations in the weights of the balancing inserts 122 is accomplished, in one example, by removing different amounts of material from the balancing inserts 122 to vary the diameter of the midsection and create different sized notches N. More material is removed, and a larger notch N created, if a lighter weight is desired.

The example balancing inserts 122 are steel, but other materials may be used in other examples. Variations in material could also be relied on to provide the variations in weights within the plurality of the balancing inserts 122.

To assist in withdrawing the example balancing inserts 122 from the cavities 110, ends of the balancing inserts 122 may include an at least partially threaded aperture 148 to receive a threaded fastener (not shown). After the threaded fastener engages the threaded aperture 148, one of the balancing inserts 122 can be more easily withdrawn from a respective one of the cavities 110. The aperture 148 can extend through the axial length of the inserts 122. In this example, only the axial end portions of the aperture 148 are threaded.

The array of circumferentially distributed cavities 110 and ability to select from inserts 122 of different weights provides multiple options for balancing the example shaft 100. Withdrawing and inserting various combinations of balancing inserts 122 with various ones of the cavities may be required. Balancing is often an iterative process, and several variations may be attempted before providing a suitable combination of balancing inserts 122 and the specific cavities 110 receiving balancing inserts 122. In some example, the cavities 110 may be able to receive multiple inserts 122, and additional inserts 122 are added to a single one of the cavities 110 if more weight is desired in a particular area.

Since the balancing inserts 122 within selected ones of the cavities 110 provides the balancing, the cavities 110 are consider the balancing positions for the shaft 100. The cavities 110 that receive the balancing inserts 122 are spaced radially about 3 inches (76 millimeters) from the axis A'. The diameter of the low spool associated with the shaft 100 may be from 20 to 30 inches (0.508 to 0.762 meters). The low rotor is thus balanced at a balancing positions that are radially spaced a distance from an axis of rotation that is less than 20% a total diameter of the associated spool.

The balancing positions are also radially inside an outermost surface 118 of the shaft 100. Balancing is thus confined radially within the shaft 100.

The balancing inserts 122 can be selectively inserted and withdrawn from the cavities 110 from the end face 116 of the bore, provided the cover 126 and the snap ring 130 are removed. To access the end face 116 of the shaft 100, removing panels may be required. However, the disclosed method of trim balancing a shaft 100 may not without require access to the disk.

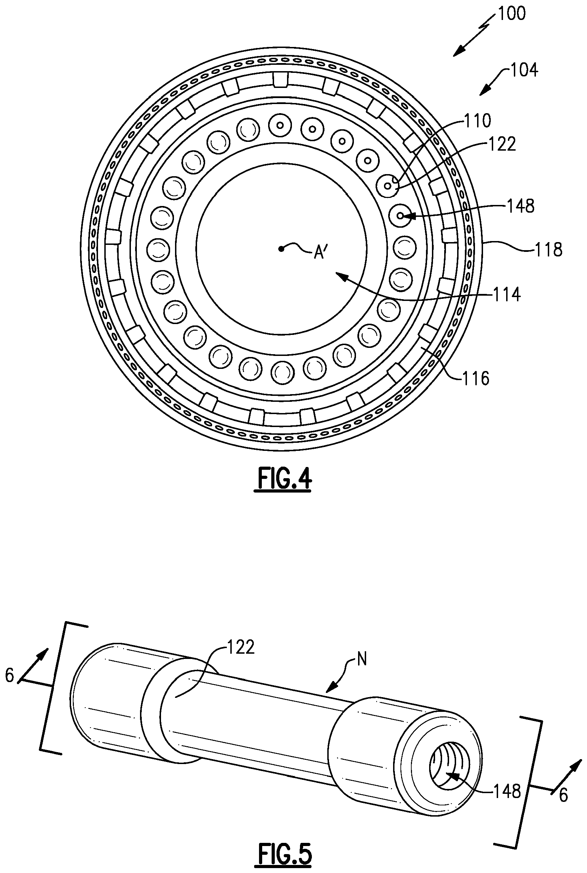

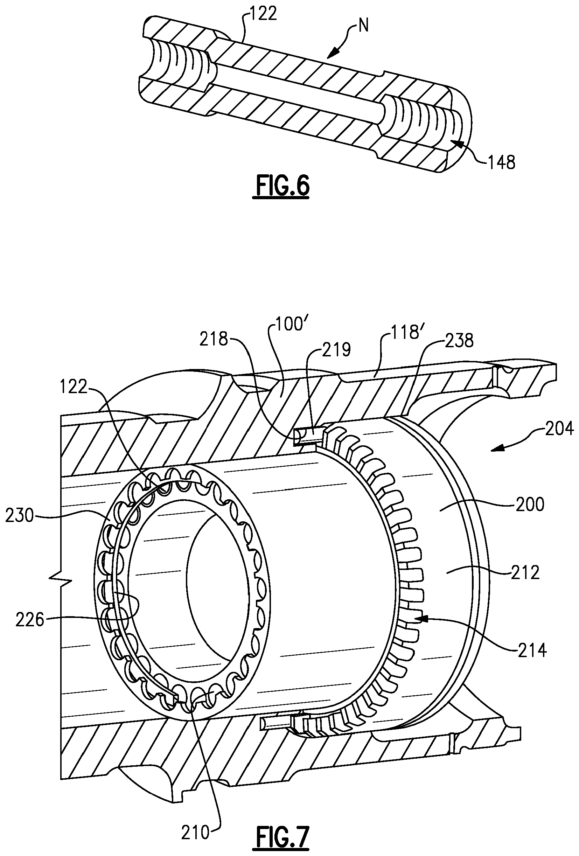

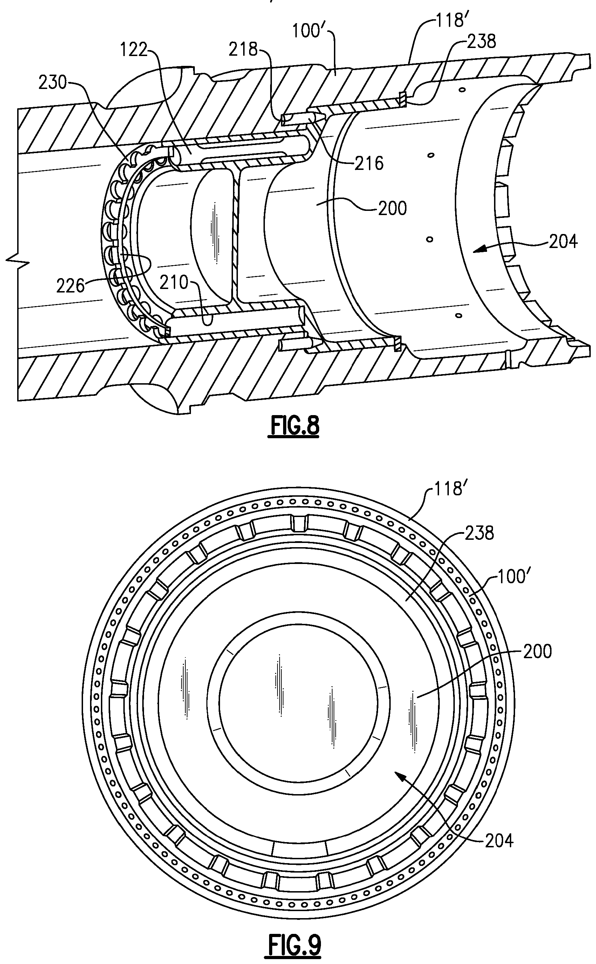

Referring now to Figures 7 to 9 with continuing reference to Figures 5 and 6, in another example embodiment, a balancing cartridge 200 is received within a bore 204 of a shaft 100'. The cartridge 200 provides an oil over plate function in some examples.

The cartridge 200 provides a plurality of cavities 210 circumferentially distributed about an axis of rotation A" for the shaft 100'. The cavities are positioned radially inside an outer surface 118' of the shaft 100'.

The example cartridge 200 includes a radially enlarged collar 212. Scallops 214 are cut into the collar 212. The scallops 214 are each configured to receive an antirotation pin 216 extending from apertures 218 in the shaft 100'. The antirotation pin 216 is tapered in this example to facilitate insertion into one of the scallops 214. Two antirotiaton pins 216 are used in this example, but other numbers could be used.

When the antirotation pin 216 is received within one of the scallops 214, rotation of the cartridge 200 relative to the shaft 100' is blocked. The scallops 214 help to increase balance vector resolutions by ensuring the cartridge 200 is installed at the desired angular orientation.

During balancing, balance inserts 122 are selectively positioned within the cavities 210 prior to installing the cartridge 200 within the bore 204. A retaining ring 226 holds the balance inserts 122 within the cavities 210. The retaining ring 226 fits within a flange 230 defined by the cartridge 200.

The cartridge 200 is then secured within the bore 204. Another retaining ring 238 holds the cartridge 200 within the bore 204. The engine 74 may then be operated to determine if the desired balancing has been achieved. If not, the cartridge 200 is withdrawn from the bore 204 and new combinations of inserts 122 are placed in the cavities 210.

The preceding description is exemplary rather than limiting in nature. Variations and modifications to the disclosed examples may become apparent to those skilled in the art that do not necessarily depart from the essence of this disclosure. Thus, the scope of legal protection given to this disclosure can only be determined by studying the following claims.

## Claims

1. A method of balancing a turbine engine shaft (100; 100'), comprising inserting a balancing insert (122) into one of a plurality of cavities (110),
**characterised in that**:
the plurality of cavities (110; 210) are radially inside an outermost surface (118) of the shaft (100;100'), the method comprises accessing the plurality of cavities (110; 210) through an aftmost end of the shaft (100; 100') and the shaft (100; 100') is a low pressure rotor shaft of a gas turbine engine (20; 74).

2. The method of claim 1, further comprising trim balancing the low pressure rotor of the gas turbine engine (20; 74) during the balancing, wherein, optionally, the gas turbine engine is a land-based gas turbine engine (74).

3. The method of claim 1 or 2, wherein the cavities (110; 210) are radially outside a central bore (114; 204) of the shaft (100; 100').

4. The method of claim 1, 2 or 3, further comprising selecting the balancing insert (122) from among a plurality of balancing inserts (122) having varied weights.

5. The method of any preceding claim, further comprising holding the balancing insert (122) axially within the cavity (110) using a shaft bore cover (126).

6. The method of claim 5, further comprising holding the shaft bore cover (126) axially utilizing a trim ring (130) received within a circumferential groove (134) of the shaft (100).

7. The method of any preceding claim, further comprising:
providing the plurality of cavities (110) with the shaft (100); or
inserting a cartridge (200) into a bore (204) provided by the shaft (100'), the cartridge (200) providing the plurality of cavities (210).

8. A gas turbine rotor, comprising:
a balancing insert (122);
a shaft (100; 100'); and
a plurality of cavities (110; 210) to selectively receive the balancing insert (122),
**characterised in that**:
the shaft (100; 100') is a low pressure rotor shaft of a gas turbine engine (20; 74) and the plurality of cavities (110; 210) are positioned radially inside an outermost surface (118) of the shaft (100; 100'), wherein the plurality of cavities (110; 210) are accessible through an aftmost end of the shaft (100; 100').

9. The rotor of claim 8, wherein the gas turbine engine is a land-based gas turbine engine (74).

10. The rotor of claim 8 or 9, wherein the cavity (110; 210) is radially outside a central bore (114; 204) of the shaft (100; 100').

11. The rotor of any of claims 8 to 10, wherein the balancing insert (122) is one of a plurality of balancing inserts (122) having varied weights.

12. The rotor of any of claims 8 to 11, wherein the plurality of cavities (110; 210) are distributed annularly about an axis of the shaft (100; 100').

13. The rotor of any of claims 8 to 12, further comprising a shaft bore cover (126) holding the balancing insert (122) axially within the cavity (110).

14. The rotor of any of claims 8 to 13, further comprising a trim ring (130) received within a circumferential groove (134) of the shaft (100; 100') to hold the shaft bore cover (126) axially.

15. The rotor of any of claims 8 to 12, further comprising a cartridge (200) providing the plurality of cavities (210), the cartridge (200) insertable into a bore (204) provided by the shaft (100').

## Patentansprüche

1. Verfahren zum Auswuchten einer Turbinentriebwerkswelle (100; 100'), das ein Einsetzen eines Auswuchteinsatzes (122) in eine Vielzahl von Hohlräumen (110) umfasst,
**dadurch gekennzeichnet, dass**:
die Vielzahl von Hohlräumen (110; 210) radial innerhalb einer äußersten Oberfläche (118) der Welle (100; 100') ist, wobei das Verfahren ein Erreichen der Vielzahl von Hohlräumen (110; 210) durch ein hinterstes Ende der Welle (100; 100') umfasst und die Welle (100; 100') eine Niederdruckrotorwelle eines Gasturbinentriebwerks (20; 74) ist.

2. Verfahren nach Anspruch 1, das ferner ein Abgleich-Auswuchten des Niederdruckrotors des Gasturbinentriebwerks (20; 74) während des Auswuchtens umfasst, wobei das Gasturbinentriebwerk optional ein landgestütztes Gasturbinentriebwerk (74) ist.

3. Verfahren nach Anspruch 1 oder 2, wobei die Hohlräume (110; 210) radial außerhalb einer zentralen Bohrung (114; 204) der Welle (100; 100') sind.

4. Verfahren nach Anspruch 1, 2 oder 3, das ferner ein Auswählen des Auswuchteinsatzes (122) aus einer Vielzahl von Auswuchteinsätzen (122) umfasst, die verschiedene Gewichte aufweisen.

5. Verfahren nach einem der vorhergehenden Ansprüche, das ferner ein axiales Halten des Auswuchteinsatzes (122) innerhalb des Hohlraums (110) unter Verwendung einer Abdeckung (126) der Wellenbohrung umfasst.

6. Verfahren nach Anspruch 5, das ferner ein axiales Halten der Abdeckung (126) der Wellenbohrung unter Nutzbarmachung eines Abgleich-Ringes (130) umfasst, der innerhalb einer Umfangsnut (134) der Welle (100) aufgenommen ist.

7. Verfahren nach einem der vorhergehenden Ansprüche, das ferner Folgendes umfasst:
Bereitstellen der Vielzahl von Hohlräumen (110) mit der Welle (100); oder
Einsetzen einer Patrone (200) in eine Bohrung (204), die von der Welle (100') bereitgestellt ist, wobei die Patrone (200) die Vielzahl von Hohlräumen (210) bereitstellt.

8. Gasturbinenrotor, der Folgendes umfasst:
einen Auswuchteinsatz (122);
eine Welle (100; 100'); und
eine Vielzahl von Hohlräumen (110; 210), um selektiv den Auswuchteinsatz (122) aufzunehmen,
**dadurch gekennzeichnet, dass**:
die Welle (100; 100') eine Niederdruckrotorwelle eines Gasturbinentriebwerks (20; 74) ist und die Vielzahl von Hohlräumen (110; 210) radial innerhalb einer äußersten Oberfläche (118) der Welle (100; 100') positioniert ist, wobei die Vielzahl von Hohlräumen (110; 210) durch ein hinterstes Ende der Welle (100; 100') erreichbar ist.

9. Rotor nach Anspruch 8, wobei das Gasturbinentriebwerk ein landgestütztes Gasturbinentriebwerk (74) ist.

10. Rotor nach Anspruch 8 oder 9, wobei der Hohlraum (110; 210) radial außerhalb einer zentralen Bohrung (114; 204) der Welle (100; 100') ist.

11. Rotor nach einem der Ansprüche 8 bis 10, wobei der Auswuchteinsatz (122) einer von einer Vielzahl von Auswuchteinsätzen (122) ist, die verschiedene Gewichte aufweisen.

12. Rotor nach einem der Ansprüche 8 bis 11, wobei die Vielzahl von Hohlräumen (110; 210) ringförmig um eine Achse der Welle (100; 100') verteilt ist.

13. Rotor nach einem der Ansprüche 8 bis 12, der ferner eine Abdeckung (126) der Wellenbohrung umfasst, die den Auswuchteinsatz (122) axial innerhalb des Hohlraums (110) hält.

14. Rotor nach einem der Ansprüche 8 bis 13, der ferner einen Abgleich-Ring (130) umfasst, der innerhalb einer Umfangsnut (134) der Welle (100; 100') aufgenommen ist, um die Abdeckung (126) der Wellenbohrung axial zu halten.

15. Rotor nach einem der Ansprüche 8 bis 12, der ferner eine Patrone (200) umfasst, die die Vielzahl von Hohlräumen (210) bereitstellt, wobei die Patrone (200) in eine Bohrung (204) einsetzbar ist, die von der Welle (100') bereitgestellt ist.

## Revendications

1. Procédé d'équilibrage d'un arbre de moteur à turbine (100 ; 100'), comprenant l'insertion d'un insert d'équilibrage (122) dans l'une d'une pluralité de cavités (110),
**caractérisé en ce que** :
la pluralité de cavités (110 ; 210) sont radialement à l'intérieur d'une surface la plus externe (118) de l'arbre (100 ; 100'), le procédé comprend l'accès à la pluralité de cavités (110 ; 210) à travers une extrémité la plus en arrière de l'arbre (100 ; 100') et l'arbre (100 ; 100') est un arbre de rotor basse pression d'un moteur à turbine à gaz (20 ; 74).

2. Procédé selon la revendication 1, comprenant en outre l'équilibrage de l'assiette du rotor basse pression du moteur à turbine à gaz (20 ; 74) pendant l'équilibrage, dans lequel, éventuellement, le moteur à turbine à gaz est un moteur à turbine à gaz terrestre (74).

3. Procédé selon la revendication 1 ou 2, dans lequel les cavités (110 ; 210) sont radialement à l'extérieur d'un alésage central (114 ; 204) de l'arbre (100 ; 100').

4. Procédé selon la revendication 1, 2 ou 3, comprenant en outre la sélection de l'insert d'équilibrage (122) parmi une pluralité d'inserts d'équilibrage (122) ayant des poids variés.

5. Procédé selon une quelconque revendication précédente, comprenant en outre le maintien de l'insert d'équilibrage (122) axialement à l'intérieur de la cavité (110) à l'aide d'un couvercle d'alésage d'arbre (126).

6. Procédé selon la revendication 5, comprenant en outre le maintien du couvercle d'alésage d'arbre (126) axialement à l'aide d'une bague de garniture (130) reçue à l'intérieur d'une rainure circonférentielle (134) de l'arbre (100).

7. Procédé selon une quelconque revendication précédente, comprenant en outre :
la fourniture de la pluralité de cavités (110) avec l'arbre (100) ; ou
l'insertion d'une cartouche (200) dans un alésage (204) fourni par l'arbre (100'), la cartouche (200) fournissant la pluralité de cavités (210).

8. Rotor de turbine à gaz, comprenant :
un insert d'équilibrage (122) ;
un arbre (100 ; 100') ; et
une pluralité de cavités (110 ; 210) pour recevoir sélectivement l'insert d'équilibrage (122),
**caractérisé en ce que** :
l'arbre (100 ; 100') est un arbre de rotor basse pression d'un moteur à turbine à gaz (20 ; 74) et la pluralité de cavités (110 ; 210) sont positionnées radialement à l'intérieur d'une surface la plus externe (118) de l'arbre (100 ; 100'), dans lequel la pluralité de cavités (110 ; 210) sont accessibles à travers une extrémité la plus en arrière de l'arbre (100 ; 100').

9. Rotor selon la revendication 8, dans lequel le moteur à turbine à gaz est un moteur à turbine à gaz terrestre (74).

10. Rotor selon la revendication 8 ou 9, dans lequel la cavité (110 ; 210) est radialement à l'extérieur d'un alésage central (114 ; 204) de l'arbre (100 ; 100').

11. Rotor selon l'une quelconque des revendications 8 à 10, dans lequel l'insert d'équilibrage (122) est l'un d'une pluralité d'inserts d'équilibrage (122) ayant des poids variés.

12. Rotor selon l'une quelconque des revendications 8 à 11, dans lequel la pluralité de cavités (110 ; 210) sont réparties annulairement autour d'un axe de l'arbre (100 ; 100').

13. Rotor selon l'une quelconque des revendications 8 à 12, comprenant en outre un couvercle d'alésage d'arbre (126) maintenant l'insert d'équilibrage (122) axialement à l'intérieur de la cavité (110).

14. Rotor selon l'une quelconque des revendications 8 à 13, comprenant en outre une bague de garniture (130) reçue à l'intérieur d'une rainure circonférentielle (134) de l'arbre (100 ; 100') pour maintenir le couvercle d'alésage d'arbre (126) axialement.

15. Rotor selon l'une quelconque des revendications 8 à 12, comprenant en outre une cartouche (200) fournissant la pluralité de cavités (210), la cartouche (200) pouvant être insérée dans un alésage (204) fourni par l'arbre (100').
